# EUROPÄISCHE PATENTANMELDUNG

(11) **EP 2 147 764 A2**
(43) Veröffentlichungstag der Anmeldung: **27.01.2010**
(21) Anmeldenummer: 09164042.5
(22) Anmeldetag: 29.06.2009
(51) Int. Cl.: B29C 35/08, B29C 71/04, H04R 25/00

(54) **Vorrichtung und Verfahren zum Aushärten von Hörhilfegehäusen**

(30) Priorität: 25.07.2008 DE 102008034712
(71) Anmelder: Siemens Medical Instruments Pte. Ltd., Singapore 139959 (SG)
(72) Erfinder: Chua, Tze Peng, 510139 Singapore (SG); Klemenz, Harald, 159958 Singapore (SG); Lim, Eng Cheong, 120408 Singapore (SG); Lim, Pei Chyi Kristy, 600307 Singapore (SG); Ma, Nisha Shakila, 520929 Singapore (SG); Jorgas, Matthias, 90469 Nürnberg (DE)
(74) Vertreter: Maier, Daniel Oliver

(57) **Zusammenfassung**

Die Erfindung betrifft eine Vorrichtung (1) sowie ein Verfahren zum Aushärten von Kunststoffformkörpern (20), insbesondere von Hörhilfegehäusen. Die Vorrichtung (1) umfasst eine Lichtquelle (2) zum Emittieren von Aushärtelicht und eine für Aushärtelicht zumindest teilweise durchlässige Halterung zum Haltern der Kunststoffformkörper (20). Gemäß der Erfindung weist die Halterung ein längliches Lichtleitelement (5) auf,
- das für Aushärtelicht durchlässig ist,
- das einen Emissionsabschnitt (6) zum Emittieren von Aushärtelicht in mehreren Raumrichtungen aufweist, und
- das derart ausgebildet ist, dass zumindest der Emissionsabschnitt (6) in eine Einwölbung oder einen Innenraum (21) eines durch die Halterung gehalterten

Kunststoffformkörpers (20) hineinragen kann. Vorteilhafter Weise ist das Lichtleitelement (5) dazu ausgebildet ist, von der Lichtquelle (2) emittiertes Aushärtelicht zu dem Emissionsabschnitt (6) zu leiten und von dort zu emittieren. Besonders vorteilhafter Weise umfasst das Lichtleitelement (5) einen Halteabschnitt, der dazu ausgebildet ist, den Kunststoffformkörper (20) zu haltern. Der Halteabschnitt und der Emissionsabschnitt (6) können sich räumlich überschneiden. Das Verfahren gemäß der Erfindung umfasst als wesentlichen Verfahrensschritt das gleichzeitige außenseitige und innenseitige Bestrahlen des Kunststoffformkörpers (20) mit Aushärtelicht durch die Lichtquelle (2) und durch das Lichtleitelement (5). Durch die Erfindung wird ein besonders gleichmäßiges Aushärten ohne punktuelle Temperaturspitzen erreicht.

## Beschreibung

Die Erfindung betrifft eine Vorrichtung sowie ein Verfahren zum Aushärten von Kunststoffformkörpern, insbesondere von Hörhilfegehäusen.

Kunststoffformkörper, insbesondere Hörhilfegehäuse, werden in der Regel in mehreren Verfahrensschritten hergestellt, von denen einer das Bereitstellen eines zwar ausgeformten, jedoch hinsichtlich des Kunststoffs noch nicht ausgehärteten Formkörpers ist. Der abschließende Verfahrensschritt des Aushärtens erfolgt gewöhnlich durch Einwirken von Wärme auf den auszuhärtenden Formkörper. Zusätzlich kann der Aushärtungsprozess durch Licht einer Wellenlänge unterstützt werden, die chemische Aushärtungs-Reaktionen verursacht. Der Aushärtungsprozess geht mit Strukturveränderungen des Kunststoffs einher, die minimale Volumen- und Form-Änderungen des Formkörpers verursachen können. Wird der Kunststoffformkörper nicht vollkommen gleichmäßig erwärmt, d.h. ausgehärtet, können deshalb Eigenspannungen und Verformungen auftreten.

Aus der Druckschrift WO 03/074248 A1 ist ein Apparat zum Herstellen von Hörhilfegehäusen unter Verwendung von Licht aushärtbaren Kunststoffen bekannt. Der Apparat weist eine Bestrahlungskammer auf, die mit einem Inertgas, z.B. Argon, zur Vermeidung von Oxidationsreaktionen gefüllt ist. Auszuhärtende Hörhilfegehäuse werden in dieser Bestrahlungskammer von einer UV-Lichtquelle bestrahlt. Die UV-Lichtquelle ist von üblicher Beschaffenheit, z.B. eine 400 W Metall-Halid-Lampe. Das zu bestrahlende Gehäuse liegt auf einer Glasplatte über der UV-Lichtquelle. Daher wird es im Wesentlichen nur aus einer Richtung, nämlich von unten, bestrahlt.

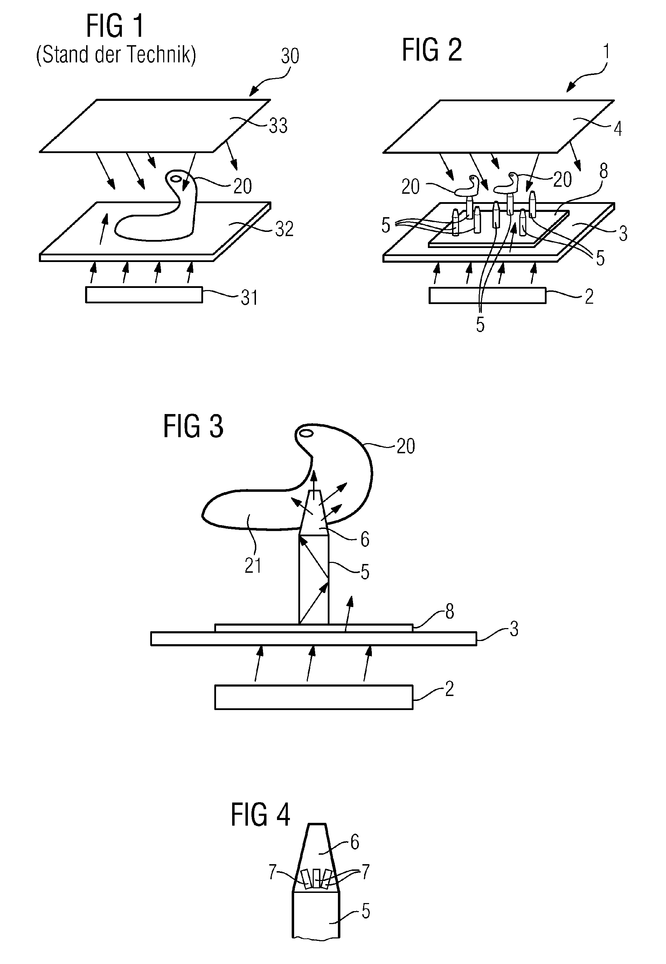

Ebenfalls bekannt sind Vorrichtungen, die den prinzipiell in **Figur 1** dargestellten Aufbau aufweisen. Die in Figur 1 dargestellte Vorrichtung 30 zum Aushärten eines Hörhilfegehäuses 20 weist ebenfalls eine Lichtquelle 31 üblicher Bauart zum Emittieren von UV-Licht auf. Die Lichtquelle 31 ist unterhalb einer Glasplatte 32 angeordnet, auf der ein zu härtendes Hörhilfegehäuse 20 angeordnet ist. Das Hörhilfegehäuse 20 liegt auf der Glasplatte 32. Um eine gleichmäßigere Bestrahlung und damit Aushärtung des Hörhilfegehäuse 20 zu erreichen, ist oberhalb ein Spiegel 33 angeordnet, der UV-Licht von der Lichtquelle 31 in Richtung des Hörhilfegehäuse 20 reflektiert. Dadurch können auch von der Lichtquelle 31 abgewandte Gehäuseabschnitte bestrahlt werden. Nachteilig an dieser Vorrichtung ist jedoch, dass komplex geformte Kunststoffformkörper zwar durch den Spiegel 33 von mehreren Seiten bestrahlt werden, jedoch trotzdem Gehäuseabschnitte verbleiben, die nicht von UV-Licht erreicht werden, jedenfalls nicht direkt. Dies gilt insbesondere für Teile von Einwölbungen und des Innenraums des Gehäuses 20.

Nachteilig kommt hinzu, dass das Gehäuse 20 direkten Kontakt zur Glasplatte 32 hat. Die Glasplatte 32 wird durch die Lichtquelle 31 erwärmt. An den Stellen, an denen das Gehäuse 20 direkten Kontakt mit der Glasplatte 32 hat, entstehen deshalb punktuelle Temperaturspitzen, die den Aushärtungsprozess zusätzlich inhomogener machen. Dieser Effekt wird dadurch verschärft, dass an den Kontaktstellen keine Konvektionsbewegung der Luft bzw. der Inertgas-Atmosphäre möglich ist, was die punktuellen Temperaturspitzen weiter erhöht. Außerdem kann sich in den Kontaktstellen die Inertgas-Atmosphäre abbauen und wird in Ermangelung von Nicht-Bewegung des Inertgases nicht erneuert. Dies führt zu zunehmender Oxidschichtbildung in den Kontaktpunkten.

Die Aufgabe der Erfindung besteht darin, eine Vorrichtung sowie ein Verfahren zum Aushärten von Kunststoffformkörpern, insbesondere von Hörhilfegehäusen, anzugeben, die einen gleichmäßigeren Härtungsprozess gewährleisten. Eine weitere Aufgabe der Erfindung besteht darin, die Bildung von Oxidschichten auf dem Kunststoffformkörper während des Aushärtungsprozesses zu reduzieren. Eine zusätzliche Aufgabe der Erfindung besteht darin, das Aushärten auch kleiner Gehäuse mit geringer Standfläche zu ermöglichen.

Die Erfindung löst diese Aufgaben durch eine Vorrichtung sowie durch ein Verfahren mit den Merkmalen der unabhängigen Patentansprüche.

Ein Grundgedanke des Vorrichtungs-Aspekts der Erfindung besteht darin, eine Vorrichtung zum Aushärten eines Kunststoffformkörpers anzugeben, umfassend eine Lichtquelle zum Emittieren von Aushärtelicht einer vorbestimmten Wellenlänge oder eines vorbestimmten Wellenlängenbereichs, und eine für Aushärtelicht durchlässige Halterung zum Haltern der Kunststoffformkörper, wobei die Halterung ein längliches Lichtleitelement aufweist,
- das für Aushärtelicht durchlässig ist,
- das einen Emissionsabschnitt zum Emittieren von Aushärtelicht in mehreren Raumrichtungen aufweist, und
- das derart ausgebildet ist, dass zumindest der Emissionsabschnitt in eine Einwölbung oder einen Innenraum eines durch die Halterung gehalterten Kunststoffformkörpers hineinragen kann.

Dadurch, dass das Lichtleitelement eine Bestrahlung auch von Einwölbungen oder Innenräumen mit Aushärtelicht ermöglicht, wird eine insgesamt gleichmäßigere Bestrahlung erreicht. Diese bewirkt eine über den gesamten Kunststoffformkörper gleichmäßigere Aushärtung. Durch die gleichmäßigere Aushärtung werden Eigenspannungen und Verformungen des Kunststoffformkörpers reduziert. Dieser Vorteil kann insbesondere für komplex geformte Kunststoffformkörper erreicht werden, die gewundene oder gewölbte oder gewinkelte Innenräume aufweisen.

In einer vorteilhaften Weiterbildung ist die Vorrichtung dazu ausgebildet, Hörhilfegehäuse auszuhärten.

Dazu ist lediglich das Lichtleitelement in einer am Hörhilfegehäuse angepassten Größe und Form zu gestalten. Hörhilfegehäuse, besonders IdO-Gehäuse (in dem Ohr) sowie CiC-Gehäuse (Completely in Canal), weisen häufig gebundene oder gewinkelte Innenräume auf, so dass sie in besonderer Weise von der beidseitigen Bestrahlung durch das Lichtleitelement im Hinblick auf einen gleichmäßigen Aushärtungsprozess profitieren.

In einer weiteren vorteilhaften Weiterbildung ist das Lichtleitelement dazu ausgebildet, von der Lichtquelle emittiertes Aushärtelicht zu dem Emissionsabschnitt zu leiten.

Dies ermöglicht den Verzicht auf zusätzliche Lichtquellen für oder in dem Lichtleitelement, was den Aufbau der Vorrichtung vereinfacht. Damit wird die Vorrichtung hinsichtlich Herstellung und Kosten günstiger.

In einer weiteren vorteilhaften Weiterbildung besteht der Emissionsabschnitt aus einem Material, das Aushärtelicht in mehrere Raumrichtungen streut.

Hierfür kann beispielsweise ein Material mit geeigneten Lichtbrechungseigenschaften ausgewählt werden, so dass der gesamte Emissionsabschnitt des Lichtleitelements aus diesem Material geformt werden kann. Dadurch erübrigen sich besondere Konstruktionsmerkmale zur Ablenkung oder zum Reflektieren des Aushärtelichts. So ergibt sich ein besonders einfacher Aufbau des Lichtleitelements, das beispielsweise einstückig in einem Zweikomponenten-Spritzgussverfahren hergestellt werden kann. Stattdessen könnte der Emissionsabschnitt auch als separate Komponente in das Lichtleitelement integriert werden, was jedoch eine besondere Berücksichtigung der optischen Grenzfläche zwischen Emissionsabschnitt und sonstigem Abschnitt des Lichtleitelements erfordern würde. Der Emissionsabschnitt erzeugt unabhängig von der konstruktiven Ausführung durch Streuung diffuses Licht, das in mehreren oder sämtlichen Raumrichtungen den Innenraum oder die Wölbung des Kunststoffformteils bestrahlt.

In einer weiteren vorteilhaften Weiterbildung umfasst der Emissionsabschnitt einen oder mehrere Emissionsspiegel, die Aushärtelicht in mehrere Raumrichtungen reflektieren.

Der Einsatz von Emissionsspiegeln zum Reflektieren des Aushärtelichts erlaubt eine gezielte Umlenkung des Lichts in eine oder mehrere gewünschte Raumrichtungen. Insbesondere bei deutlich gewinkelten Innenräumen kann durch die gezielte bzw. gerichtete Ablenkung mit einem Emissionsspiegel ein solcher Arm- oder Winkelabschnitt intensiver mit Aushärtelicht bestrahlt werden.

In einer weiteren vorteilhaften Weiterbildung umfasst das Lichtleitelement einen Halteabschnitt, der dazu ausgebildet ist, den Kunststoffformkörper zu haltern.

Ein solcher Halteabschnitt könnte bereits dadurch erhalten werden, dass der Endabschnitt bzw. das Ende des Lichtleitelements, das in den Innenraum oder die Wölbung des Kunststoffformkörpers hineinreicht, unter Vermeidung von Spitzen oder Kanten rund und großflächig ausgeformt ist. Dadurch ergibt sich eine größere Auflagefläche, die ungewollte Verformungen des Kunststoffformkörpers vermeidet. Ein besonderer Vorteil der Ausgestaltung des Lichtleitelements mit einem Halteabschnitt und somit als zusätzliches Halteelement besteht darin, dass ein Kunststoffformkörper, der vom Lichtleitelement gehalten wird, nicht mehr auf der Glasplatte oder Grundplatte der Vorrichtung aufzuliegen braucht. Dadurch werden punktuelle Temperaturspitzen sowie ein Abbau der Inertgas-Atmosphäre in solchen Berührungspunkten vermieden. Dadurch wird ein gleichmäßigerer Aushärteprozess erreicht und die Bildung von Oxidschichten in Ermangelung von Inertgas-Atmosphäre wird reduziert. Außerdem können auch Gehäuseformen mit kleiner Standfläche, die auf einer Grundplatte dazu neigen umzufallen, problemlos durch das Lichtleit- und Halteelement gehalten werden. So ist auch für solche Gehäuseformen sichergestellt, dass Aushärtelicht in den Innenraum gelangt.

In einer weiteren vorteilhaften Weiterbildung überschneiden sich der Halteabschnitt und der Emissionsabschnitt räumlich zumindest teilweise.

Dadurch ergibt sich ein einfacher Aufbau des Lichtleitelements und die Emission erfolgt insbesondere auch im Bereich des Halteabschnitts, wodurch punktförmige Abdeckungen, die nicht von Aushärtelicht erreicht werden, in den Berührungspunkten von Halteabschnitt und Kunststoffformkörper vermieden werden.

In einer weiteren vorteilhaften Weiterbildung ist ein Spiegel zum Reflektieren von Aushärtelicht vorgesehen, wobei die Halterung zwischen der Lichtquelle und dem Spiegel angeordnet ist, und der Spiegel so ausgerichtet ist, dass er Aushärtelicht in Richtung der Halterung reflektiert.

Durch die Anordnung des Spiegels wird auch die außenseitige Bestrahlung des Kunststoffformkörpers auf mehrere Bestrahlungsrichtungen ausgeweitet. Dadurch wird die Außenseite des Kunststoffformkörpers gleichmäßiger ausgehärtet.

In einer weiteren vorteilhaften Weiterbildung emittiert die Lichtquelle Aushärtelicht einer Wellenlänge im UV-Wellenlängenbereich.

Für viele Polymere ist eine Aushärtung durch UV-Licht besonders geeignet und wird gut beherrscht. Insbesondere Hörhilfegehäuse bestehen üblicherweise aus Polymeren, die durch UV-Licht ausgehärtet werden, und profitieren deswegen in besonderer Weise von der Verwendung von UV-Licht für das Verfahren. UV-Lichtquellen sind vorbekannt und verfügbar.

In einer weiteren vorteilhaften Weiterbildung umfasst die Halterung eine für Aushärtelicht zumindest teilweise durchlässige Grundplatte, wobei die Grundplatte zwischen dem Lichtleitelement und der Lichtquelle angeordnet ist, und wobei die Grundplatte durch Aushärtelicht erwärmt wird.

Durch die teilweise Durchlässigkeit der Grundplatte bzw. genauer gesagt durch die teilweise Absorption von UV-Licht wird die Grundplatte erwärmt. Die Erwärmung trägt zum Aushärte-Prozess bei, wobei die Grundplatte eine flächenmäßig größere Wärmeplatte darstellt, so dass punktuelle Erwärmungen durch die kleinerflächige UV-Lichtquelle vermieden werden.

In einer weiteren vorteilhaften Weiterbildung sind die Lichtquelle und die Grundplatte so aufeinander abgestimmt, dass die Grundplatte durch von der Lichtquelle emittiertes Aushärtelicht auf eine Temperatur von 55 Grad Celsius bis 65 Grad Celsius erwärmt wird.

Temperaturen im Bereich von 60 °C sind zur Aushärtung von Kunststoffen, insbesondere von für Hörhilfegehäuse verwendeten Polymeren, besonders gut geeignet.

Ein Grundgedanke des Verfahrensaspekts der Erfindung sieht ein Verfahren zum Aushärten eines Kunststoffformkörpers vor mit den Verfahrensschritten:
- Bereitstellen einer Lichtquelle zum Emittieren von Aushärtelicht,
- Bereitstellen eines länglichen Lichtleitelements, das dazu ausgebildet ist, Aushärtelicht in mehreren Raumrichtungen zu emittieren,
- Einbringen des Lichtleitelements in eine Einwölbung oder einen Innenraum des Kunststoffformkörpers,
- gleichzeitig außenseitiges und innenseitiges Bestrahlen des Kunststoffformkörpers mit Aushärtelicht durch die Lichtquelle und durch das Lichtleitelement.

Das Verfahren ermöglicht ein besonders gleichmäßiges Aushärten, indem der Kunststoffformkörper möglichst gleichmäßig von außen sowie von innen mit Aushärtelicht bestrahlt wird. Darüber hinaus erfolgt die Bestrahlung gleichzeitig, d.h. in einem einzigen Arbeitsschritt, so dass zusätzliche Verfahrensschritte zum Ändern der Bestrahlungsrichtung oder zum Ändern der Ausrichtung des Kunststoffformkörpers, die ansonsten eine gleichmäßigere Bestrahlung bewirken könnten, vermieden werden. Somit ist das Verfahren weniger aufwändig und zeitsparend. Da durch die gleichmäßigere Bestrahlung punktuelle Unterschiede der Strahlungsintensität reduziert werden, kann darüber hinaus die Strahlungsintensität erhöht werden, ohne eine nicht akzeptable Steigerung von Eigenspannungen oder Verformungen des Kunststoffformkörpers zu verursachen. Die erhöhte Strahlungsintensität kann eine weitere Beschleunigung des Verfahrens bewirken.

In einer vorteilhaften Weiterbildung ist der Kunststoffformkörper ein Hörhilfegehäuse.

Insbesondere Hörhilfegehäuse profitieren aufgrund ihrer häufig gewinkelten oder gewundenen Form, z.B. von IdO-Gehäusen oder CiC-Gehäusen, in besonderer Weise von dem Verfahren.

Weitere vorteilhafte Weiterbildungen der Erfindung ergeben sich aus den abhängigen Patentansprüchen und der nachfolgenden Beschreibung von Ausführungsbeispielen anhand von Figuren. Es zeigen:
- FIG 1: Aushärtevorrichtung nach dem Stand der Technik
- FIG 2: Vorrichtung nach der Erfindung
- FIG 3: Lichtleitelement mit Halteabschnitt
- FIG 4: Lichtleitelement mit Emissionsspiegeln

In **Figur 1** ist eine Vorrichtung 30 zum Aushärten von Kunststoffformkörpern aus dem Stand der Technik dargestellt, die vorangehend bereits beschrieben wurde. Sie erlaubt zwar ein Bestrahlen eines Kunststoffformkörpers 20, beispielsweise eines Hörhilfe-Gehäuses oder -Schale, aus zwei Richtungen. Sie ermöglicht jedoch kein Bestrahlen von allen Seiten, falls der Körper Einwölbungen oder Innenräume mit Verzweigungen oder Windungen aufweist.

In **Figur 2** ist eine Vorrichtung 1 zum Aushärten eines Kunststoffformkörpers 20 dargestellt, die ein Ausführungsbeispiel der Erfindung bildet und von dem Grundgedanken der Erfindung Gebrauch macht.

Die Vorrichtung 1 umfasst eine Lichtquelle 2, die Aushärtelicht emittiert. Eine vorteilhafte Ausführungsform sieht vor, dass als Aushärtelicht Licht im ultravioletten Wellenlängenbereich, also UV-Licht, verwendet wird. UV-Lichtquellen sind bekannt und im Handel verfügbar.

Die Lichtquelle 2 emittiert Aushärtelicht in der Abbildung in Richtung nach oben, wobei die Strahlungsrichtung durch nicht näher bezeichnete Pfeile angedeutet ist. Das Aushärtelicht trifft zunächst auf eine Glasplatte 3, die zumindest teilweise durchlässig für Licht der entsprechenden Wellenlängen ist. Auf der Glasplatte 3 ist eine Grundplatte 8 angeordnet, die ebenfalls zumindest teilweise durchlässig für das Aushärtelicht ist. Auf der Grundplatte 8, die ebenfalls aus Glas gefertigt sein kann, sind mehrere Lichtleitelemente 5 angeordnet. Die Lichtleitelemente 5 sowie die Grundplatte 8 bilden eine Halterung zum Halten von Kunststoffformkörpern, die in der Vorrichtung 1 durch Bestrahlung ausgehärtet werden sollen. Je nach Konstruktion der Vorrichtung 1 bzw. der Halterung ist auch die Glasplatte 3 Bestandteil der Halterung. Sie kann jedoch auch von der Halterung losgelöst sein, so dass die aus der Grundplatte 8 und den Lichtleitelementen 5 gebildete Halterung lediglich auf die Glasplatte 3 aufgesetzt ist. Ausgestaltung und Funktion der Lichtleitelemente 5, die gleichzeitig als Halteelemente dienen, werden in der nachfolgenden Figurenbeschreibung näher erläutert.

Das von der Lichtquelle 2 emittierte Aushärtelicht durchläuft die Glasplatte 3 sowie die Grundplatte 8 und trifft teilweise auf die auszuhärtenden Kunststoffformkörper 20, hier Hörhilfegehäuse. Weitere Anteile laufen im Wesentlichen ungehindert weiter und treffen auf den in der Abbildung oben angeordneten Spiegel 4. Vom Spiegel 4 wird das Aushärtelicht in Richtung der auszuhärtenden Gehäuse und der Glasplatte 3 reflektiert. Dadurch wird eine Bestrahlung der Gehäuse von mindestens zwei Richtungen, in der Abbildung von unten sowie von oben, erreicht. Dies bewirkt eine gleichmäßigere Bestrahlung der Gehäuse und somit einen gleichmäßigeren Aushärteprozess.

Der Raum zwischen der Grundplatte 3 und dem Spiegel 4 kann als Bestandteil einer gasdichten Kammer ausgeführt sein, die zur Durchführung des Aushärteprozesses mit Inertgas gefüllt werden kann. Vorteilhafterweise kann z.B. Argon als Inertgas eingesetzt werden. Durch die Inertgas-Atmosphäre in der Kammer, in der die Aushärtung erfolgt, werden Oxidationsprozesse in dem auszuhärtenden Material reduziert.

In **Figur 3** ist ein Lichtleitelement 5 der vorangehend erläuterten Vorrichtung 1 vergrößert dargestellt.

Wie in der vorangehenden Abbildung ist die Lichtquelle 2 unten angeordnet, darüber befinden sich die teilweise für das emittierte Licht durchlässige Glasplatte 3 und Grundplatte 8. Die Richtung des Aushärtelichts ist durch Pfeile angedeutet.

Auf der Grundplatte 8 ist das Lichtleitelement 5 angeordnet. Aushärtelicht durchläuft die Glasplatte 3 sowie die Grundplatte 8 und trifft teilweise auf das Lichtleitelement 5. Anteile des Aushärtelichts, die dort auftreffen, treten in das Lichtleitelement 5 ein. Insofern durchläuft das Aushärtelicht zunächst die Grenzfläche zu Glasplatte 3, anschließend zur Grundplatte 8, anschließend in das Lichtleitelement 5. Um ungewollte Verluste durch Streuung oder Reflexion an den jeweiligen Grenzflächen zu reduzieren, können diese Elemente aus geeignet aufeinander abgestimmtem oder gleichem Material bestehen. Zudem können die Grenzübergänge entsprechend bearbeitet und miteinander verbunden sein. Um Strahlungsverluste möglichst ganz zu vermeiden, können die Glasplatte 3, die Grundplatte 8 sowie das Lichtleitelement 5 jedoch auch einstückig gefertigt sein. Dadurch werden Grenzflächenübergänge nach dem Eintritt in die Glasplatte 3 vermieden.

Aushärtelicht, das in das Lichtleitelement 5 eingetreten ist, wird innerhalb dessen längsreflektiert und dadurch entlang des Lichtleitelements 5 geleitet. Die Längsreflexion ist wiederum durch Pfeile angedeutet.

Das Aushärtelicht wird dadurch in den Emissionsabschnitt 6 des Lichtleitelements 5 geleitet. Der Emissionsabschnitt 6 kann mit dem sonstigen Lichtleitelement 5 einstückig verbunden sein, z.B. durch ein Zweikomponenten-SpritzgussVerfahren. Er kann jedoch auch als separates Stück gefertigt und aufgesetzt sein, wobei entsprechende Vorkehrungen zur Vermeidung von Strahlungsverlusten durch Reflexion und Brechung an der Grenzfläche zu vermeiden sind.

Der Emissionsabschnitt besteht aus einem Material, das für das Aushärtelicht streuend wirkt. Das Streulicht wird in eine Vielzahl von Raumrichtungen emittiert. Dadurch wird vielfach gestreutes, diffuses Aushärtelicht in den umliegenden Raum gestrahlt.

Auf den Emissionsabschnitt 6 ist der auszuhärtende Kunststoffformkörper 20, hier ein Hörhilfegehäuse, aufgesetzt und wird von diesem gehalten. Zu diesem Zweck ist der Emissionsabschnitt 6 gleichzeitig als Halteelement ausgebildet. Er weist dazu eine in der Dimensionierung an den Innenraum 21 des Hörhilfegehäuses 20 angepasste Dimensionierung auf. Zudem weist er keine scharfen Kanten oder spitzen Winkel auf, die zu Verformungen des aufliegenden Gehäuses führen würden. Vielmehr ist der Emissionsabschnitt 6 so ausgeformt, dass das Gehäuse 20 ohne Druckpunkte mit gleichmäßiger Auflagekraft aufliegen kann.

Durch die gleichzeitige Haltefunktion des Emissionsabschnitts 6 ragt dieser in den Innenraum des Gehäuses 20 hinein, so dass dieses mit der Innenraumöffnung in Richtung zur Lichtquelle 2 gehalten wird. Es wird durch das Lichtleitelement 5 somit in geeigneter Ausrichtung positioniert und am Umkippen oder Umfallen gehindert. Zudem emittiert der Emissionsabschnitt 6 Aushärtelicht innerhalb des Innenraums des Gehäuses in eine Vielzahl von Raumrichtungen, so dass eine gleichmäßige Bestrahlung des Innenraums gewährleistet ist. Insbesondere wird im dargestellten Beispiel auch der links angeordnete Arm oder Zweig des Hörhilfegehäuses 20 von Aushärtelicht erreicht, was durch Bestrahlung ausschließlich von der Lichtquelle 2 und ohne den Emissionsabschnitt 6 des Lichtleitelements 5 nicht möglich wäre.

In **Figur 4** ist eine andere Ausführungsform des Lichtleitelements 5 bzw. von dessen Emissionsabschnitt 6 dargestellt. Im Emissionsabschnitt 6 sind Emissionsspiegel 7 angeordnet, die zum Reflektieren des Aushärtelichts dienen. Dabei werden Hauptrichtungen für die Emission von Aushärtelicht durch die Ausrichtung der Emissionsspiegel 7 vorgegeben. Beispielsweise könnte eine Konfiguration gewählt werden, in der die Emissionsspiegel 7 Aushärtelicht vor allem in radialer Richtung emittieren, während in axialer Richtung vor allem Aushärtelicht direkt von der Lichtquelle 2 einfällt.

Unter Verwendung der vorangehend beschriebenen Vorrichtung kann ein Verfahren zum Aushärten von Kunststoffformkörpern, insbesondere Hörhilfegehäusen, ausgeführt werden, das unaufwändig und zeitsparend ist. Dabei wird eine schnelle und einfache, aber gleichzeitig sichere Positionierung der Hörhilfegehäuse in der Bestrahlungskammer dadurch erreicht, dass sie lediglich auf die Lichtleitelemente 5 aufgesetzt zu werden brauchen. Die Bestrahlung mit Aushärtelicht erfolgt vor allem aufgrund der Lichtleitelemente 5 bzw. durch die Emissionsabschnitte 6 gleichzeitig innenseitig und außenseitig und somit insgesamt gleichmäßig über das gesamte Hörhilfegehäuse verteilt. Durch die gleichmäßige Intensitätsverteilung wird ein besonders gleichmäßiger Aushärteprozess gewährleistet. Die Gleichmäßigkeit des Prozesses kann dazu genutzt werden, die Intensität insgesamt zu erhöhen, um den Prozess zu beschleunigen. Zudem erfolgt die Bestrahlung von allen Seiten und Richtungen gleichzeitig, also in einem einzigen Verfahrensschritt. Zusätzlicher Zeitaufwand für weitere Verfahrensschritte, z.B. das Ändern der Bestrahlungsrichtung oder der Ausrichtung der Hörhilfegehäuse 20, wird vermieden. Das ist zum einen zeitsparend und zum anderen reduziert es den konstruktiven Aufwand der Trockenvorrichtung 1.

Ein Grundgedanke der Erfindung lässt sich wie folgt zusammenfassen: Die Erfindung betrifft eine Vorrichtung 1 sowie ein Verfahren zum Aushärten von Kunststoffformkörpern 20, insbesondere von Hörhilfegehäusen. Die Vorrichtung 1 umfasst eine Lichtquelle 2 zum Emittieren von Aushärtelicht und eine für Aushärtelicht zumindest teilweise durchlässige Halterung 3 zum Haltern der Kunststoffformkörper 20. Gemäß der Erfindung weist die Halterung 3 ein längliches Lichtleitelement 5 auf,
- das für Aushärtelicht durchlässig ist,
- das einen Emissionsabschnitt 6 zum Emittieren von Aushärtelicht in mehreren Raumrichtungen aufweist, und
- das derart ausgebildet ist, dass zumindest der Emissionsabschnitt 6 in eine Einwölbung oder einen Innenraum 21 eines durch die Halterung 3 gehalterten Kunststoffformkörpers 20 hineinragen kann.

Vorteilhafter Weise ist das Lichtleitelement 5 dazu ausgebildet, von der Lichtquelle 2 emittiertes Aushärtelicht zu dem Emissionsabschnitt 6 zu leiten und von dort zu emittieren. Besonders vorteilhafter Weise umfasst das Lichtleitelement 5 einen Halteabschnitt, der dazu ausgebildet ist, den Kunststoffformkörper 20 zu haltern. Der Halteabschnitt und der Emissionsabschnitt 6 können sich räumlich überschneiden. Das Verfahren gemäß der Erfindung umfasst als wesentlichen Verfahrensschritt das gleichzeitige außenseitige und innenseitige Bestrahlen des Kunststoffformkörpers 20 mit Aushärtelicht durch die Lichtquelle 2 und durch das Lichtleitelement 5. Durch die Erfindung wird ein besonders gleichmäßiges Aushärten ohne punktuelle Temperaturspitzen erreicht.

## Patentansprüche

1. Vorrichtung (1) zum Aushärten eines Kunststoffformkörpers (20), umfassend eine Lichtquelle (2) zum Emittieren von Aushärtelicht einer vorbestimmten Wellenlänge oder eines vorbestimmten Wellenlängenbereichs, und eine für Aushärtelicht zumindest teilweise durchlässige Halterung zum Haltern der Kunststoffformkörper (20),
**dadurch gekennzeichnet, dass**
die Halterung ein längliches Lichtleitelement (5) aufweist,
- das für Aushärtelicht durchlässig ist,
- das einen Emissionsabschnitt (6) zum Emittieren von Aushärtelicht in mehreren Raumrichtungen aufweist, und
- das derart ausgebildet ist, dass zumindest der Emissionsabschnitt (6) in eine Einwölbung oder einen Innenraum (21) eines durch die Halterung gehalterten Kunststoffformkörpers (20) hineinragen kann.

2. Vorrichtung (1) nach Anspruch 1,
**dadurch gekennzeichnet, dass**
sie dazu ausgebildet ist, Hörhilfegehäuse auszuhärten.

3. Vorrichtung (1) nach Anspruch 1 oder 2,
**dadurch gekennzeichnet, dass**
das Lichtleitelement (5) dazu ausgebildet ist, von der Lichtquelle (2) emittiertes Aushärtelicht zu dem Emissionsabschnitt (6) zu leiten.

4. Vorrichtung (1) nach einem der vorhergehenden Ansprüche,
**dadurch gekennzeichnet, dass**
der Emissionsabschnitt (6) aus einem Material besteht, das Aushärtelicht in mehrere Raumrichtungen streut.

5. Vorrichtung (1) nach einem der vorhergehenden Ansprüche,
**dadurch gekennzeichnet, dass**
der Emissionsabschnitt (6) einen oder mehrere Emissionsspiegel (7) umfasst, die Aushärtelicht in mehrere Raumrichtungen reflektieren.

6. Vorrichtung (1) nach einem der vorhergehenden Ansprüche,
**dadurch gekennzeichnet, dass**
das Lichtleitelement (5) einen Halteabschnitt umfasst, der dazu ausgebildet ist, den Kunststoffformkörper (20) zu haltern.

7. Vorrichtung (1) nach Anspruch 6,
**dadurch gekennzeichnet, dass**
sich der Halteabschnitt und der Emissionsabschnitt (6) zumindest teilweise räumlich überschneiden.

8. Vorrichtung (1) nach Anspruch 7,
**dadurch gekennzeichnet, dass**
ein Spiegel (4) zum Reflektieren von Aushärtelicht vorgesehen ist, dass die Halterung zwischen der Lichtquelle (2) und dem Spiegel (4) angeordnet ist, und dass der Spiegel (4) so ausgerichtet ist, dass er Aushärtelicht in Richtung der Halterung reflektiert.

9. Vorrichtung (1) nach einem der vorhergehenden Ansprüche,
**dadurch gekennzeichnet, dass**
die Lichtquelle (2) Aushärtelicht einer Wellenlänge im UV-Wellenlängenbereich emittiert.

10. Vorrichtung (1) nach einem der vorhergehenden Ansprüche,
**dadurch gekennzeichnet, dass**
die Halterung eine für Aushärtelicht zumindest teilweise durchlässige Grundplatte (8) umfasst, das die Grundplatte (8) zwischen dem Lichtleitelement (5) und der Lichtquelle (2) angeordnet ist, und dass die Grundplatte (8) durch Aushärtelicht erwärmt wird.

11. Vorrichtung (1) nach Anspruch 10,
**dadurch gekennzeichnet, dass**
die Lichtquelle (2) und die Grundplatte (8) so aufeinander abgestimmt sind, dass die Grundplatte (8) durch von der Lichtquelle (2) emittiertes Aushärtelicht auf eine Temperatur von 55 Grad Celsius bis 65 Grad Celsius erwärmt wird.

12. Verfahren zum Aushärten eines Kunststoffformkörpers (20) mit den Verfahrensschritten:
- Bereitstellen einer Lichtquelle (2) zum Emittieren von Aushärtelicht,
- Bereitstellen eines länglichen Lichtleitelements (5), das dazu ausgebildet ist, Aushärtelicht in mehreren Raumrichtungen zu emittieren,
- Einbringen des Lichtleitelements (5) in eine Einwölbung oder einen Innenraum (21) des Kunststoffformkörpers (20),
- gleichzeitig außenseitiges und innenseitiges Bestrahlen des Kunststoffformkörpers (20) mit Aushärtelicht durch die Lichtquelle (2) und durch das Lichtleitelement (5).

13. Verfahren nach Anspruch 12,
**dadurch gekennzeichnet, dass**
der Kunststoffformkörper (20) ein Hörhilfegehäuse ist.

14. Verfahren nach Anspruch 12 oder 13,
**dadurch gekennzeichnet, dass**
als Aushärtelicht Licht einer Wellenlänge im UV-Wellenlängenbereich verwendet wird.

15. Verfahren nach einem der Ansprüche 12 bis 14,
**dadurch gekennzeichnet, dass**
das Lichtleitelement (5) dazu ausgebildet ist, den Kunststoffformkörper (20) zu haltern.
